# EUROPEAN PATENT APPLICATION

(11) **EP 3 951 492 A1**
(43) Date of publication of application: **09.02.2022**
(21) Application number: 20776357.4
(22) Date of filing: 23.03.2020
(51) Int. Cl.: G03B 17/02

(54) **UNIVERSAL MOUNTING CASE FOR VIDEO CAMERAS**

(30) Priority: 27.03.2019 RU 2019108792
(71) Applicant: Savelyev, Denis Nikolayevich, Sochi, 354065 (RU)
(72) Inventor: IGNATOV, Evgeniy Aleksandrovich, Ryazan, 390048 (RU); SAVELYEV, Denis Nikolayevich, Sochi, 354065 (RU)
(74) Representative: Ivanov, Ivan Nikolov
(86) International application number: PCT/RU2020/000155
(87) International publication number: WO 2020/197440

(57) **Abstract**

The present invention belongs to the field of electronic television equipment, namely outdoor CCTV equipment. Versatile security camera junction box is made in the form of truncated sphere, includes box housing, box insertion and box lid, box housing is made as a one-piece construction, combining box bottom with water-draining channels, mounting stands and breakable windows for cable connectors, side section with breakable windows, opening on top for cable connectors and latches for lid fastening, contains drainage channels on the inner surface of the box that change their direction and height in order to make it difficult for water to get inside the box, mounting stands made in such a way that they protrude a few millimeters from the plane of the bottom, which allows to move the bottom of the box away from the wall, box insert being a part of the box side section of spherical shape with breakable window latches on its inner side designed for reliable fastening in the box housing, on the outer side there is a lid lock, made in the form of a protrusion, also the box insert has holes for its final fixation together with the housing on the mounting surface by means of fasteners, the lid is of spherical shape, has four breakable windows, latches-clips located on four sides of the box, are rails which align with the recesses for screws on the enclosure and the insert. The technical result, achieved by the above listed features, is to improve the technical and operational properties of the product, to increase operational safety and to improve the aesthetics. 9 subclaims, 13 figures.

## Description

The present invention belongs to the field of electronic television equipment, namely outdoor CCTV equipment.

In the prior art, there is a spherical camera (patent CN206807604 (U) publ. 2017-12-26), incorporating a base with a communication cover, a rotating gear, a cover locking the spherical camera, a spherical and a ball cover, the ball cover passing through a guiding element, the ball cover connected to the base, the ball cover can be parallel to the direction of the holding surface of the base, the hinge is articulated in the ball cover and can be perpendicular to the direction of the holding surface. The design combines the video camera and junction box into a single structural system. The solution is highly purpose-built and does not allow for individual dome or cylindrical cameras made by different manufacturers. Therefore, there is no possibility to use the product as a convenient, aesthetic, versatile and, at the same time, budget junction box for cameras of different manufacturers, sizes and positioning of mounting holes.

Hikvision junction boxes for street spherical cameras are known to contain a mounting plate, horizontal and vertical brackets, protective housing and a dome cover. Hikvision DS-1260ZJ junction box (https://hikvision.ru/product/ds 1260zj), consisting of a cylindrical base with side openings for wires and cables, was chosen as a prototype. Disadvantages of these products are more labor-intensive installation and maintenance, a small amount of internal space for laying cables and connectors, the high cost and a limited customization, which limits the use of junction boxes of the manufacturer together with video cameras from other manufacturers.

Years of experience has shown that there is a fairly wide range of cameras for which it is necessary to use junction boxes and brackets, such as wall brackets, vertical pole mounting brackets, angle brackets.

First of all, the need to use of junction boxes in conjunction with cameras associated with the fact that the patch cables of cameras and sources need protection from external exposure. Primarily from moisture and dust. In addition, the cable connectors and cables themselves must be concealed somewhere. Junction boxes are used for this purpose.

In counterparts, mounting screw holes, threaded mounting holes for mounting the camera, and the boundary between the housing and lid of the box serve as an additional source of moisture penetration inside the box, which leads to failure of the cable connectors switching. The boundary between the enclosure and the lid of the box has a sealing element, but it does not guarantee the protection of this contour against moisture penetration, because it can be jammed and deformed. All these factors, despite the use of relatively strong aluminium alloys, often do not provide adequate protection for cable connectors and make the installation process more difficult and time-consuming.

The threaded mounting holes for installing the camera in metal counterparts housings are usually painted, resulting in a layer of paint on the surface of the threads, which creates considerable complications when tightening the screws during installation of the camera on the end cover of the box. This often complicates and slows down the installation process.

Some types of junction boxes, when mounting the end cap to the box housing, create a border at the place of contact which requires sealing. A sealing gasket is used for this purpose, the need to align it causes considerable difficulties during installation. In addition, in the counterparts, the opening/closing of the box is done in the vertical direction. As the mounting holes, threaded mounting holes for the camera and the camera itself are located on the end cap of the box and the cable connectors inside the junction box, in order to service these cable connections, for example if the video signal from the camera is interrupted, it is necessary to first dismount the camera itself and then disassemble the junction box. Only then is access to the cable connectors, and then the cause of the fault can be determined and eliminated. This makes this design extremely inconvenient to use. The reason for this is that the camera is usually mounted/dismounted at a height and both hands are required to manipulate the connectors, but the camera itself also has to be kept close to the installation/maintenance area, which usually requires the technician to hold the camera head to the shoulder or to hold the cable connectors, which significantly increases the risk of injury, falling of the camera, mounts or tools. Moreover, due to the inconveniences described above, the body is overstretched, resulting in physical and mental fatigue as well as such negative consequences as headaches, poor sleep, chronic fatigue, pinched nerves, impaired vision, poor blood supply to muscles, swollen face, early wrinkles, and reduced oxygen supply to the brain. Reduced oxygen supply to the brain leads to an overall decrease in personal performance, memory impairment, contributes to the development of degenerative processes in the brain, etc. However, in the case of maintenance, the disadvantages of working with this type of junction box design do not end even after finding and fixing the fault in the cable connectors, because then you must install the box end cap on the housing, fixing it with the mounting screws. If the camera is moved, it will be necessary to refocus it. All this slows down and complicates the installation of the camera and increases the danger of the work involved.

Aluminium alloy counterparts are normally provided with a single cable entry point at the bottom and two points on the side wall. It is not possible to make other cable entry points. This limits the flexibility of the cable connection. Plastic counterparts are generally designed with several predefined entry points. It also allows the necessary entry points to be drilled at any desired location. Plastic counterparts give greater flexibility in terms of cable entry, but the need to drill additional holes leads to increased time and labour costs.

In the case of the metal counterparts of this type of product, there is a risk of stray electrical potential between the conductive surface and the camera housing, which is eliminated in the versatile junction box, as the camera is mounted on a dielectric surface.

The claimed technical solution is aimed at solving the following tasks:
- application of the junction box for cameras of different form-factors (versatility),
- simplifying the mounting and maintenance of CCTV cameras,
- speeding up the mounting and maintenance of CCTV cameras,
- variability in the wiring of cable connectors,
- protection of cable connectors;
- improved aesthetics of cable entries;
- dielectric protection,
- vandalism protection,
- acoustic signal indicating the correct assembly of the product components,
- increasing the safety of installation work.

The tasks are solved by the fact that the versatile junction box for video cameras includes a box housing with an opening on top for cable connectors, also contains a box lid, box insert and bottom, while the box insert is a part of the housing side section, the inner side of which has latches, designed for reliable fixation in the box housing. The junction box is shaped like a truncated sphere. The box housing is designed as a one-piece structure. The bottom of the box contains drainage channels on the inner surface of the box that change their direction and height in order to make it difficult for water to get inside the box. The casing, lid and insertion box contains breakable windows for cable connectors. The box on the bottom contains mounting stands made in such a way that they protrude a few millimeters from the plane of the bottom, which allows to move the bottom of the box away from the wall. The box housing, lid and insert contain fixing elements, including retainers, latches, notches and rails, to hold all parts of the box securely in place. The junction box contains a side gasket that fits into the breakable windows and has several entry points for the passage of various utilities. The side gasket entry points are available in diameters of 5mm, 16mm and 20mm. At the base of the lid there are opening windows in the form of rectangular slots.

The technical result, achieved by the above listed features, is to improve the technical and operational properties of the product, to increase operational safety and to improve the aesthetics.

The versatile junction box is made of plastics of high strength grades with the addition of fillers that improve the operational properties of the product.

The invention is illustrated by figures, showing:
- Fig.1 -: general view of the junction box;
- Fig.2 -: disassembled view of the junction box;

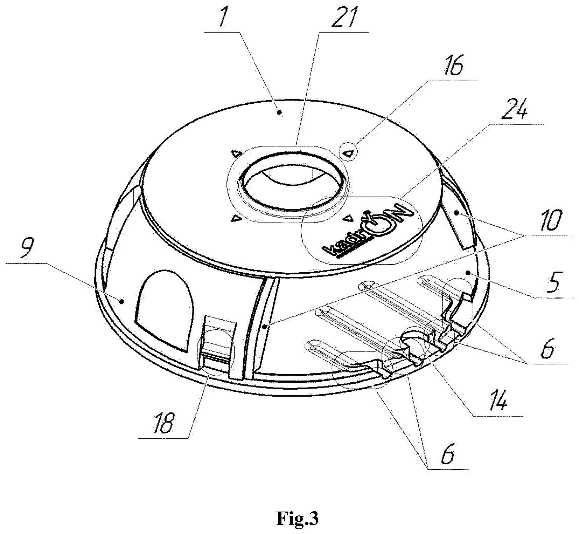

- Fig. 3 -: view of junction box without lid,

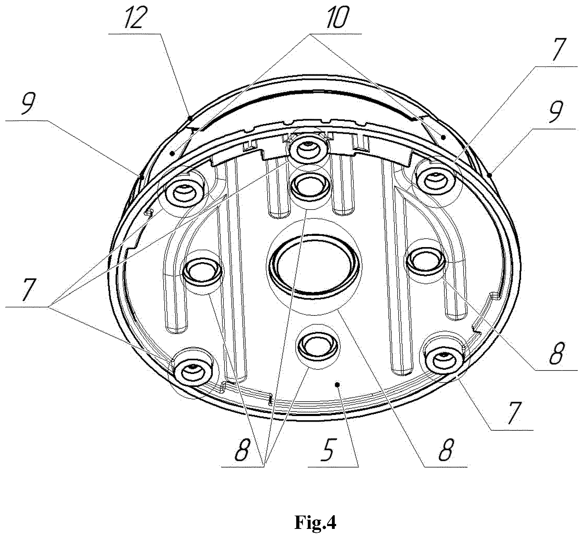

- Fig. 4 -: bottom view of junction box without lid;
- Fig. 5 -: front view of junction box,
- Fig. 6 -: junction box insert, rear view;
- Fig. 7 -: junction box lid view;
- Fig. 8 -: drainage path of water through drainage channels,
- Fig. 9 -: path preventing water from entering into the box;

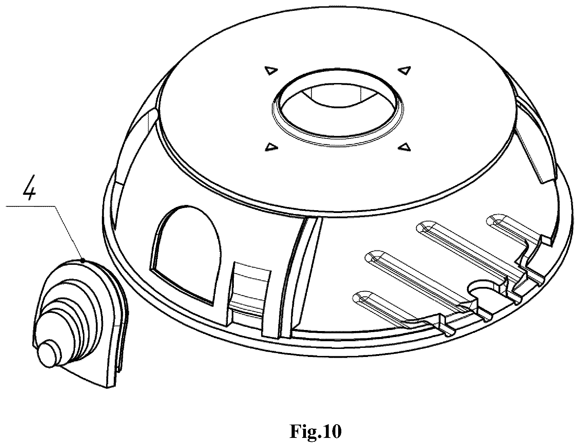

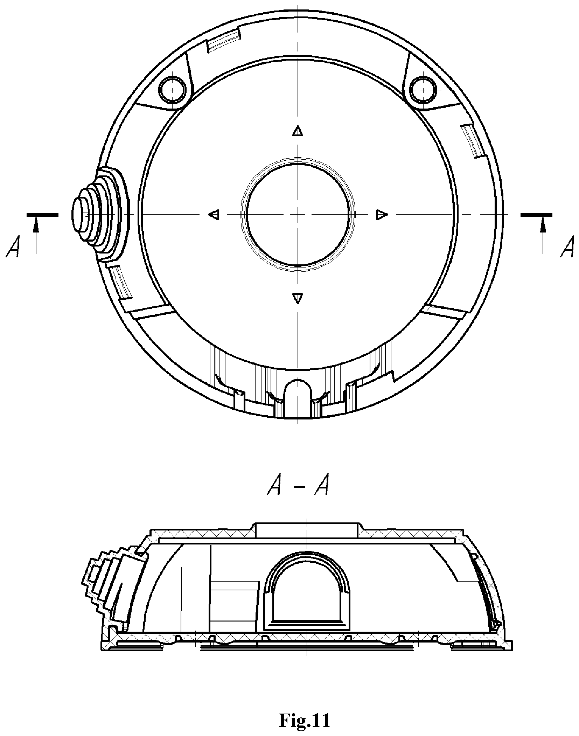

- Fig. 10 -: illustrates junction box and a place for installing a gasket,

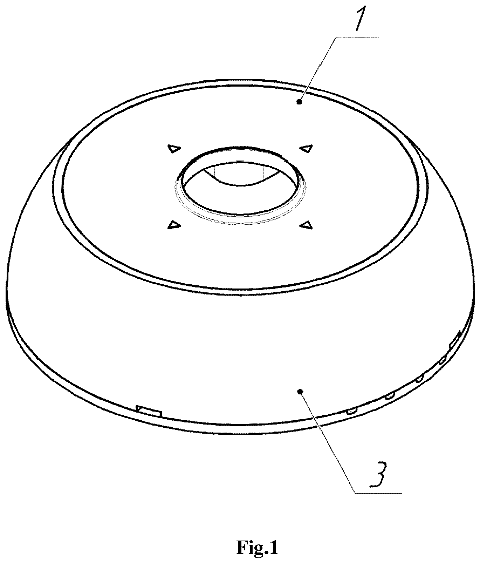

- Fig.1 1 -: sketch of a junction box with a side gasket;

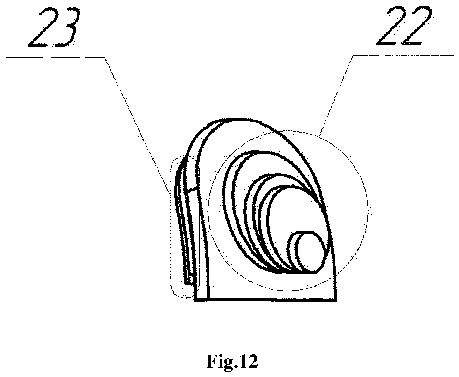

- Fig. 12 -: sketch of side gasket,

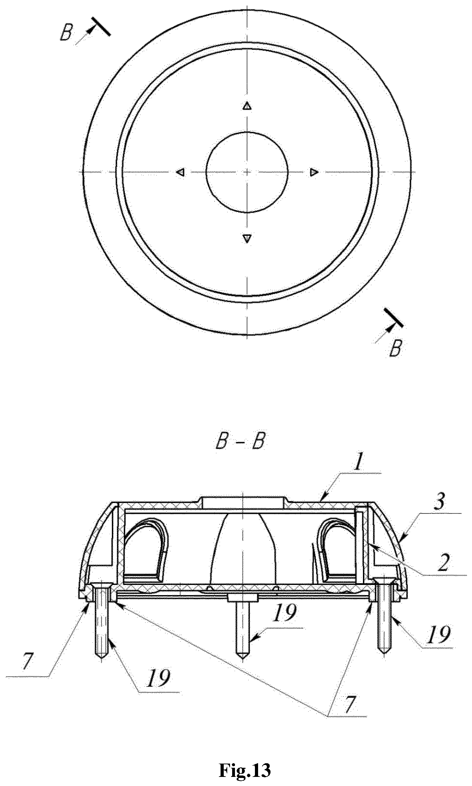

- Fig. 13 -: sketch of junction box with design of fixing stands,

Where
- 1 -: box body
- 2 -: box insert
- 3 -: box cover
- 4 -: side gasket
- 5 -: bottom of the box
- 6 -: drain channels
- 7 -: mounting stands
- 8 -: breakable window
- 9 -: side panel section
- 10 -: sides for cable connections
- 11 -: rails
- 12 -: mounting base
- 13 -: latches
- 14 -: holes for fixing the base and the mounting to the wall
- 15 -: lid retainer
- 16 -: position indicator (reference points)
- 17 -: opening windows
- 18 -: retainer
- 19 -: fastener
- 20 -: notch for the retainer
- 21 -: opening for cable connectors
- 22 -: breakable notches for cable or corrugated cable entry
- 23 -: retaining groove
- 24 -: logo.

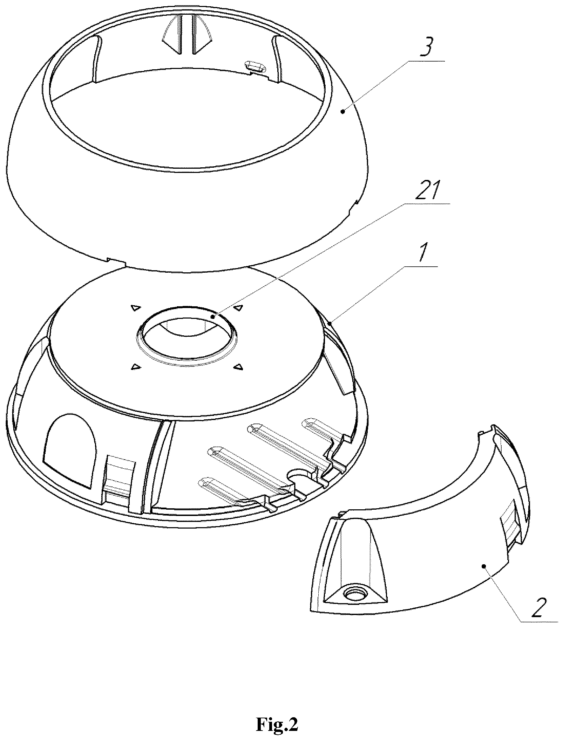

Versatile security camera junction box (Fig.1, 2) has spherical shape and consists of three main parts: junction box base 1, junction box insert 2 and junction box lid 3. The fourth part: lateral gasket 4 is used when it is necessary to seal the lateral entry and improve the aesthetics (one to four pieces are used).

Housing of the box is the main structural element.

Due to the use of non-standard design solutions and special manufacturing equipment, the housing of the box 1 is made as a one-piece structure combining the box bottom 5 with drainage channels 6, mounting stands 7 and breakable windows 8 (on the box bottom), side panel section 9 with sides 10 for cable connections, Bottom window for switching cable connectors and with three breakable windows 8 (on the side walls of the box) as well as mounting base 12 (the camera is installed on the mounting base outside the box using self-tapping screws) with an opening for cable connectors 21. By combining the bottom of the box, the side wall sector, and the mounting base into a one-piece structure in the areas with increased danger of water penetration (box bottom, mounting base, and side panel section), a watertight junction is achieved which provides reliable protection for the cable connectors.

The side panels 9 of the junction box are combined with the bottom of the box 5 and the mounting base 12 (end plate) into a single structural design. This structure is manufactured by injection moulding on injection moulding machines using special tooling.

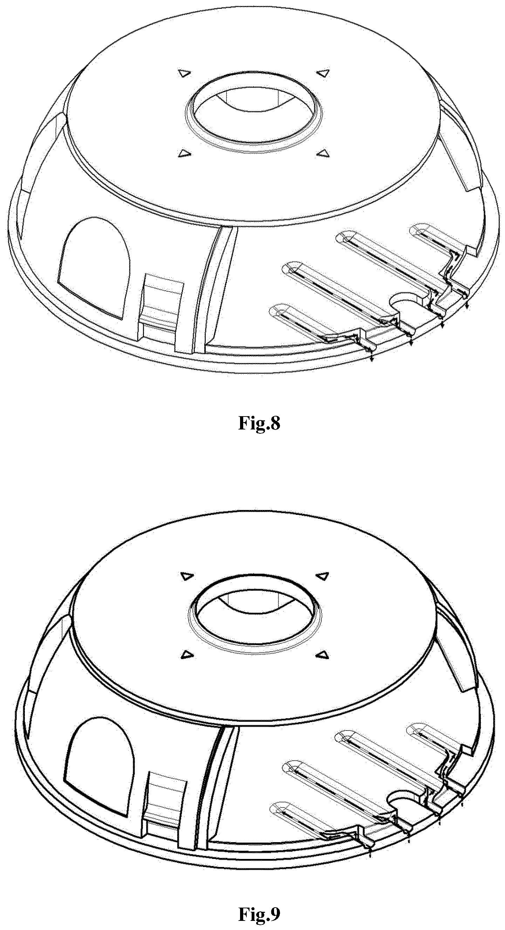

Drain channels 6 are located on the inner surface of the box bottom 5 and consist of gutters, changing their direction in order to prevent water from getting inside the box (Fig. 8 and 9). Practical experience in the use of outdoor boxes with high degree of protection against moisture has shown that in most cases moisture can penetrate inside the box. In order to prevent this problem, a system of drainage channels is provided in the design of the versatile box. If water penetrates the box, it is immediately discharged by the force of gravity. The complicated geometry of these channels makes it difficult for water to get into the box. The outflow path of water from the box to the outside (outdoors) is shown by arrows in Fig. 8. Water penetration into the box is prevented by the geometry of the drainage channels, which change their direction several times, have height gradients and sharp angles in the direction of water flow from the street side into the box. Barriers preventing water from entering from the outside and the path preventing it from getting into the box are shown in Fig. 9 with arrows.

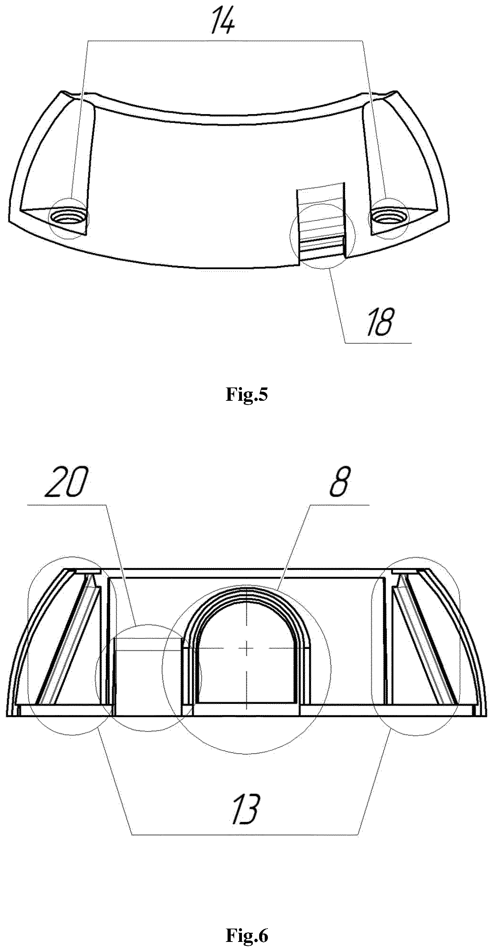

Box insert 2 (Figs. 5, 6) is a semicircular part of the housing sector on the inner side has special latches 13, designed for reliable fixation in the housing box. The latches are triangular flat protrusions. The retainers 18 for the lid on the insert and the sides of the housing are designed as protrusions. If necessary, it is possible to break out the window 8 for cable or corrugated cable entry at the bottom of the box. The box insert also has holes 14 for its final fixing with the housing to the mounting surface using fasteners. To ensure that the box lid is evenly secured, apart from the three clips on the housing of the box, there is also a corresponding clamp on the insert in the box.

The box insert can be removed from the lower section of the housing to improve ease of wiring and to enable maintenance work on the camera without removing it from the junction box.

When securing the insert to the box housing, the insert latches, due to the resilient deformation property of the plastic and pressure from the installer, can slide over the walls of the housing to secure the cable connectors. At the initial moment of the closing process, the insert is compressed. After the latches have passed the housing wall boundaries, the insert is released again, securing it firmly in the housing. When removing the insert from the housing, the process is reversed.

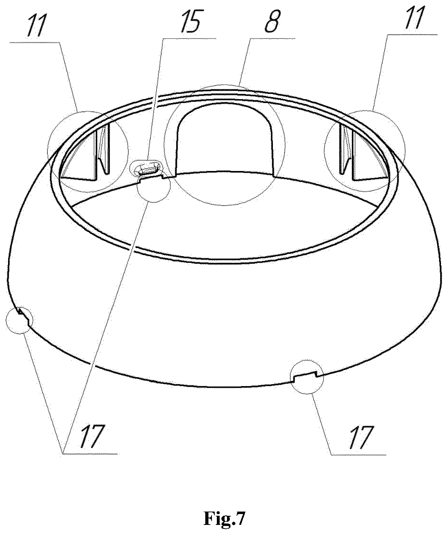

On the lid of the box 3 (Fig.7) there are four breakable windows 8 (at an angle of 90 degrees), in case it is necessary to insert a cable or corrugation from any of the sides. The lid of the box 3 is evenly fixed on the housing of the box 1 and the box insert 2 by means of four latches-clips, located on four sides of the product at an angle of 45 degrees. To ensure correct positioning of the lid of the box when assembling it to the housing, there are rails which align with the recesses for screws on the enclosure and the insert. This eliminates the possibility of incorrect alignment of the box lid with the box housing and insert.

On the inside of the lid, the lid retainers are positioned at a 45° angle to each other. The 45° angle of the lid retainers ensures that the lid is evenly clamped to the box housing and the insert on all four sides.

When closing the lid on the box housing and the box insert, the lid retainers slip over the surface of the body and insert retainers, producing a distinctive "click" sound, indicating that the lid locking process has been completed correctly.

When closed, the lid retainers are positioned below the housing and insert retainers, preventing unintentional opening.

The opening windows 17, shaped as rectangular slots at the base of the lid, are designed to make it easier to remove the lid from the box. To remove the lid, a flat screwdriver is alternately placed in the opening windows and turned 90 degrees.

The side gasket 4 (Fig. 12) is designed to seal and improve the aesthetics of the box in the case of corrugation or cable supply. When installing the side gasket in place of a broken window/s, retaining groove 23 securely closes the perimeter of the broken window in the box housing or the box insert, and fixing clamping collar securely fastens in the broken window housing.

The sidewall gasket is designed in such a way that it has several levels for the passage of various media (e.g. 5 mm cables, 20 mm corrugations, 16 mm corrugations).

In the vast majority of cases the corrugation, as well as the cable to reduce the risk of water ingress into the box, are inserted from below. When inserting from below, depending on the type of the element to be inserted, for example 20 mm diameter corrugation or flat cable, the corresponding hole is cut in the gasket at the side and the inserted element is then placed into the fixing groove of the gasket and the box insert with a previously broken out window is put over the fixing groove of the gasket. The insert with the gasket inserted in its groove is then pushed into the box housing.

If the required element is inserted from above or to the side, the corresponding space in the side seal is cut off beforehand and the corresponding element is inserted into it. After installation, the gasket with the element will be inserted into the housing.

If one or more gaskets (side gaskets) are used, the geometry of the box lid follows the geometry of the gaskets, creating an impression of a monolithic structure.

The design of the box allows it to be fixed to the mounting surface both with self-tapping screws and with various types of dowels popular among installers.

The mounting stands 7 are designed to offset the bottom of the box from the wall by a few millimetres, allowing water flowing through the wall to pass between the wall and the end of the box. The design of the mounting stands is shown in Fig. 13.

A number of sizes are available for industry to avoid considerable differences in size between the box and the camera (e.g. for cameras with a mounting diameter up to 98 mm, up to 120 mm etc.).

Standardization of this junction box with cameras of different form-factors is achieved by eliminating the use of grid mounting holes designed to mount a particular camera on a particular box, as implemented in the design of metal counterparts. The design of plastic counterparts, allow the installation of various cameras, but are not dedicated to CCTV products. This model is designed specifically for video surveillance systems and has the ability to use in conjunction with video cameras of different sizes.

The described product allows the camera to be mounted on the surface of the box housing through the use of self-tapping screws, enabling the box to mount any camera with the largest diameter of the mounting surface not exceeding a certain size. If the largest diameter of the mounting surface of the camera exceeds the limit size specified in the manual for the box by up to 6 mm, the product can be used if the box is used without a box lid. If the lid is not used, the junction box retains its functionality. The lid improves the aesthetics of the product and provides additional protection against vandalism and moisture.

Simplified installation of CCTV cameras is achieved by increasing the ease of installation and reducing the number of steps required by the installer, thanks to the special design of the base of the box. The base of the box is designed for mounting to the wall and at the same time the camera is mounted on it. The base of the box has a window at the bottom, making it easy to switch cable connectors and then secure them inside the box by inserting the box and the lid of the box. This design allows for maintenance of the cable connectors without dismantling the camera. This feature also expands the practical application variations of the product, increasing its versatility, which is not found in the design of counterparts.

The aesthetics of the box have been significantly improved over its counterparts by the use of a truncated sphere as the geometric shape, which enhances the perception of the camera.

To fix the box to the mounting surface, use self-tapping screws to fix it in place, align it with the connectors and fix it with screws in the top two holes.

If the box is to be fixed by means of dowels, it is then possible to break out the lintels to allow the dowels to pass through. The box is then secured using the top two holes in the same way as with self-tapping screws.

If necessary, an additional fastening point in the box body is the lower centre hole.

If the cables are connected from the side of the wall, they are inserted through the precut hole in the bottom of the box, one of the five holes as required. After that the cable connector is crimped. Next, the cable connectors from the camera shall be inserted through a suitable hole on the box body, and then the camera shall be attached to the box surface by self-tapping screws (if necessary, the camera can be attached to the box body even before the box body is attached to the wall). Then the camera connectors are wired to the connectors from the wall or from one or more sides. Next, switch on the camera and adjust its final position. Then the cable connectors are placed inside the box housing, securing them behind the walls for the cable connectors to prevent them from falling out of the housing. The box insert is then inserted into the box housing by applying a force towards the centre of the box housing until a distinctive "click" sound is heard, indicating that the insert has been correctly positioned. The box insert and the box housing are then secured to the wall using the two bottom holes. Next, put the lid of the box on the assembled structure. After that, a force is applied to the lid of the box in a circular motion against the wall until a distinctive click is heard, indicating that the latches have clicked into place. Apart from the clicking sound, a secure fixation is indicated by the absence of misalignment between the enclosure and the cover.

Disassembly is possible by lifting with a flathead screwdriver through the small opening windows on the underside of the box lid. At the same time, the screwdriver handle is turned by 90 degrees and the force is directed away from the box base.

In the case of the cable entry on the wall side, five possible entry points are designed on the end of the box, depending on convenience. These entry points are structurally designed as break-out points. One of them is located in the centre and one on each side. This allows for flexible cable entry without changing the position of the box.

The fixation of the box lid to the box base and the box insert is made by means of snap fasteners which are placed on four sides of the product at an angle of 45 degrees. The box insert is similarly secured to the base of the box, only with two latches.

The anti-vandalism qualities of the product are achieved thanks to its unconventional design. When the lid of the box is on, it is impossible to reach the fasteners and to remove the lid a flat screwdriver not less than 5 mm wide is required.

A distinctive "click" sound during installation indicates that the box insert and the lid are securely locked in place. This design feature is achieved thanks to the unique geometry of the parts.

The design of the box allows it to be mounted on the mounting surface both with self-tapping screws and with various types of dowels popular among installers.

In the design of the junction box, when the lid is put on, access to the fixing screws is blocked by the lid.

If it is necessary to perform maintenance of the video camera on the claimed mounting box design, the installer will need to perform the following operations:
1. To disassemble the box:
   - Insert a flathead screwdriver into the lid opening windows and, by turning the screwdriver 90 degrees along its axis through 3-4 windows in succession, remove the box lid from the box housing;
   - Unscrew one or two fasteners from the hole for fixing the base and the insert to the wall;
   - Remove the insert from the box housing;
2. Remove the interfaces and cable connectors;
3. Determine and rectify the cause of the fault;
4. Put the cable connectors back into the box;
5. To reassemble the box:
   - close the window for switching cable connectors with the box insert by applying force to the insert towards the centre of the box housing until a characteristic click sound is heard, indicating that the insert latches against the housing latches;
   - screw one or two fixing elements into the holes for fixing the base and the insert to the wall;
   - fit the lid of the box onto the housing by pressing the lid in a circular motion to lock it in place.

Thereby, the advantages of the versatile security camera junction box are as follows:
1) Application for video cameras of different form-factors;
2) Simplification and acceleration of camera installation;
3) Increased safety of the mounting:
   - Reduction of psychophysical fatigue during mounting
   - Reducing the risk of injuries during installation work;
   - Reducing the risk of damage to expensive equipment during installation work;
   - Reduction of risk of dropping tools and fasteners when mounting work is in progress.
4) Ability to carry out maintenance of the camera without removing it from the junction box;
5) Aesthetics (harmonic design complements the appearance of the camera;)
6) Ease of laying cable connectors;
7) Antivandalism;
8) Acoustic signal indicating the correct assembly of the product components;
9) Possibility of applying various fastening options;
10) Preserving the functionality of the box, both when used with or without a box lid;
11) Possibility to use a gasket for the cable entry hole;
12) No requirement to use sealing gaskets;
13) Availability of drainage channels;
14) Versatility of cable connector entry.

## Claims

1. Versatile security camera junction box including box housing with an opening on the top for cable connectors entry, differing in that it also contains a box lid, box insert and box bottom, with the box insert being a part of the box side section with latches on its inner side, designed for reliable fastening in the box housing to provide access to cable connectors during installation and maintenance of the camera without disturbing its focus.

2. Versatile security camera junction box in claim 1, differing in that it is made in the form of a truncated sphere.

3. Versatile security camera junction box according to claim 1, differing in that the housing of the junction box is made as a one-piece structure.

4. Versatile security camera junction box according to claim 1, differing in that the bottom of the box contains drainage channels, made on the inner surface of the bottom of the box and being gutters, changing their direction and height in order to make it difficult for water to enter the inside of the box.

5. Versatile security camera junction box according to claim 1, differing in that the body, lid and insert contain breakable windows for cable connectors.

6. Versatile security camera junction box according to claim 1, differing in that the box on the bottom contains mounting stands made in such a way that they protrude a few millimeters from the plane of the bottom, which allows to move the bottom of the box away from the wall.

7. Versatile security camera junction box according to claim 1, differing in that thebox housing, lid and insert contain fixing elements, including retainers, latches, notches and rails, to hold all parts of the box securely in place.

8. Versatile security camera junction box according to claim 1, differing in that it also contains a side gasket that fits into the breakable windows and has several entry points for the passage of various utilities.

9. Versatile security camera junction box according to claim 2, differing in that the side gasket entry points are available in diameters of 5mm, 16mm and 20mm.

10. Versatile security camera junction box according to claim 1, differing in that at the base of the lid there are opening windows in the form of rectangular slots.
